# EUROPÄISCHE PATENTSCHRIFT

(11) **EP 1 782 680 B1**
(45) Veröffentlichungstag und Bekanntmachung des Hinweises auf die Patenterteilung: **31.12.2008**
(21) Anmeldenummer: 05024065.4
(22) Anmeldetag: 04.11.2005
(51) Int. Cl.: A01G 3/00

(54) **Vorrichtung zum Zerkleinern von Pflanzengut in Form von Grünmasse und/oder Schwachholz**
Device for crushing vegetable products in the form of green mass or juvenile wood
Dispositif pour le broyage de produits végétaux dans la forme de masse verte ou de jeunes buissons

(43) Veröffentlichungstag der Anmeldung: 09.05.2007
(73) Patentinhaber: Müthing GmbH & Co. KG, 59955 Winterberg (DE)
(72) Erfinder: Wiegert, Ludger, 48346 Ostbevern (DE); Müthing, Michael, 59955 Winterberg (DE)
(74) Vertreter: Lempert, Jost

(56) Entgegenhaltungen:
- DE-A1- 2 111 457
- DE-A1- 3 216 951
- FR-A- 2 277 624
- FR-A- 2 314 654
- FR-A- 2 384 546

## Beschreibung

Die Erfindung betrifft eine Vorrichtung zum Zerkleinern von Pflanzengut in Form von Grünmasse und/oder Schwachholz nach dem Oberbegriff des Anspruchs 1.

Derartige Vorrichtungen werden insbesondere als Mulch- oder Mähgeräte eingesetzt und dienen zur Zerkleinerung von Pflanzengut, insbesondere von Gras und Graspflanzen, dünnen Asten usw. Sie weisen eine mit Arbeitsschneiden versehene Arbeitswelle auf, die sich relativ zu am Inneren einer im vorderen und/oder oberen Bereich der Vorrichtung vorgesehenen Gehäusewandung angeordneten Gegenschneiden dreht, wodurch das Pflanzengut zerkleinert wird.

So zeigen die DE 21 11 457 sowie die FR 2 277 624 des gleichen Anmelders ein Mulchgerät mit einem unterhalb einer Haube um eine horizontale Achse umlaufenden Welle, die über radiale Verbindungselemente mit mehreren gelenkigen Messern versehen ist. An der Innenseite der Haube sind mit radialem Abstand zu den Messern hintereinander im Querschnitt dreieckförmige Brechleisten angeordnet. Das zu zerkleinernde Gut wird durch die Messer aufgenommen, gegen die Brechleisten bewegt, so zerkleinert und von der rückwärtigen Haubenseite wieder auf den Boden abgeworfen.

Die Geschwindigkeit des Pflanzengutes auf die geraden Gegenschneiden wird dabei zum großen Teil bei dieser Art der Zerkleinerung durch das stumpfe Auftreffen wieder vernichtet. Das Mulchgut wird durch das Auftreffen auf die meist nach kurzer Zeit in der Regel verstopften Gegenschneiden abgebremst, statt sauber zerkleinert zu werden und anschließend schlechter weitertransportiert. Dies ist in der Praxis an einer Verschmutzung am Gehäuse der Gegenschneide gut erkennbar. Außerdem erhöht sich der Kraftbedarf bei verstopften Schneiden überproportional. Diese Art der Zerkleinerung erfordert sehr viel Energie und Kraftbedarf bei nicht optimaler Zerkleinerungsqualität, was oft in der Praxis dazu führt, dass Gegenschneiden entfernt werden und auf die eigentlich erforderliche Zerkleinerungsqualität zugunsten Kraft- und Energieeinsparung vollständig verzichtet wird. Neben diesem Bremseffekt aus der durch das haftende Pflanzengut gebildeten breiteren Aufschlagsfläche für das nachgeförderte Material ist auch ein negativer Effekt auf die Zerkleinerungsqualität gegeben, da die hängengebliebene Biomasse an den Schneiden stumpf wirkt und gleichzeitig weich ist, so dass ein erheblich größerer Energieaufwand für die Zerkleinerung und den Weitertransport mit zusätzlichen Reibungsverlusten bedingt ist.

Die Zerkleinerungswirkung bekannter derartiger Vorrichtungen zum Zerkleinern, auch der oben genannten, ist daher zwar befriedigend, aber nicht optimal. Darüber hinaus sammelt sich wie beschrieben zerkleinertes Pflanzengut an der Innenwandung des Gehäuses, wodurch der Arbeitserfolg reduziert wird und von Zeit zu Zeit dort haftende zerkleinertes Arbeitsgut entfernt werden und nach Beendigung der Arbeit auch die Innenwandung gründlich gesäubert werden müssen. Wird nicht von Zeit zu Zeit eine Reinigung vorgenommen, so besteht eine Verstopfungsgefahr. Außerdem vergrößert sich der energetische Aufwand.

Der Erfindung liegt daher die Aufgabe zugrunde, eine Vorrichtung der eingangs genannten Art unter Vermeidung der genannten Nachteile dahingehend zu verbessern, dass ein besseres Arbeitsergebnis unter Reduzierung der Verstopfungsgefahr sowie der einzusetzenden Energie erreicht wird.

Erfindungsgemäß wird die genannte Aufgabe mit einer Vorrichtung der eingangs genannten Art gelöst, die die kennzeichnenden Merkmale des Anspruchs 1 aufweist.

Die Erfindung sieht also vor, mit ihrem inneren Ende außerhalb der Kontur der sich drehenden Arbeitsschneiden endenden stationären Gegenschneiden den von der Arbeitswelle und den Arbeitsschneiden geförderten Arbeitsgutstrom entgegengerichteten Schneidkanten nicht radial auszurichten, sondern unter einem endlichen Winkel zum Radius der Arbeitswelle und zwar derart, dass die Schneidkante grundsätzlich von ihrer äußersten Kante zu ihrer innersten Kante in Drehrichtung der Arbeitswelle und damit in Förderrichtung des zu zerkleinernden Pflanzenguts verläuft.

Von den Arbeitsschneiden aufgenommenes Pflanzengut wird - zumindest soweit es noch unzerkleinert ist - von diesen zu der Arbeitswelle gefördert, wobei es sich durch Fliehkraftwirkung nach außen und damit in den Bereich der Gegenschneiden bewegt.

Durch die Erfindung wird erreicht, dass das Pflanzengut an den stationären Gegenschneiden zwar zerkleinert wird, aber nicht nur zerkleinert wird, sondern seine Bewegung, die es aufgrund seiner durch die Förderung mittels der Arbeitsschneiden ihm verliehenen kinetischen Energie hat, entlang der derart zum Radius geneigt verlaufenden Schneidkante umgelenkt und insbesondere das noch nicht zerkleinerte Arbeitsgut wieder in den Arbeitsbereich der Arbeitsschneiden der Arbeitswelle geführt wird, wodurch es von diesem erneut geschnitten und/oder beschleunigt und zur weiteren Zerkleinerung dann der nächsten stationären Gegenschneide zugeführt wird, ohne dass sich Material im Bereich zweier stationärer Gegenschneiden an der Innenwandung des Gehäuses ansammelt und zu einer Verstopfung führt. Schließlich wird insbesondere das noch nicht zerkleinerte Pflanzengut erneut von weiteren Arbeitsschneiden teilweise nachzerkleinert und gelangt dann optimal in den Auswurf. Dies hat den wichtigen Nebeneffekt, dass auch im Auswurf Verstopfungen vermieden werden, die bei herkömmlicher Formgebung immer wieder auftreten. Im Effekt führt die Erfindung zu einer deutlich besseren Zerkleinerung des Pflanzengutes zur Vermeidung von Verstopfungen und zu einem deutlich geringeren Energieaufwand bei besserem Arbeitsergebnis.

Die Ausgestaltung der Schneidkanten der Gegenschneiden kann unterschiedlich sein. So können die Schneidkanten der stationären Gegenschneiden grundsätzlich Bereiche mit konvexer oder gerader Kontur aufweisen. In bevorzugter Ausgestaltung hat sich aber herausgestellt, dass konkav ausgebildete Bereiche vorgesehen sind. Dabei kann eine Schneide auch durch eine Kombination oder Aufeinanderfolge von konkaven, konvexen und geraden Bereichen gebildet sein, soweit die Grundrichtung der Schneide mit einer endlichen Neigung (endlicher Winkel) zum Radius zur Arbeitswelle sichergestellt ist.

Grundsätzlich kann dabei vorgesehen sein, dass die Schneidkanten der Gegenschneiden über ihre gesamte Länge konvex oder gerade ausgebildet sind, wobei sich die besten Arbeitsergebnisse mit einer konkav ausgebildeten Schneidkante der Gegenschneide ergeben haben.

Soweit die Schneidkanten der Gegenschneiden gerade ausgebildet sind, sehen bevorzugte Ausgestaltungen vor, dass der Winkel der Schneidkante zum Radius zwischen 30 und 75°, vorzugsweise bei 45 oder mehr Grad liegt. Bei einer konvexen Ausgestaltung der Gegenschneiden ist der Winkel am äußersten Bereich der Schneide bei 20° oder mehr zum Radius, während am inneren Ende der Schneide der Winkel 90° beträgt, also nahezu tangential zur Kontur der umlaufenden Arbeitsschneiden gerichtet ist. Bei einer bevorzugten konkaven Ausgestaltung der Schneidkanten der Gegenschneiden liegt der Winkel im äußersten Bereich ebenfalls bei nahezu 90° zum Radius der Arbeitswelle und verkleinert sich bis zur inneren Kante der Gegenschneide auf mehr als 10°.

Eine bevorzugte Weiterbildung sieht vor, dass die Gegenschneiden von in Förderrichtung aufeinanderfolgenden Gegenschneiden in Erstreckungsrichtung der Antriebswelle zueinander versetzt angeordnet sind, wobei der Versatz vorzugsweise zwischen 1/3 und 2/3 des Abstandes der Gegenschneiden eine Reihe, insbesondere etwa 1/2 beträgt.

In weiterer bevorzugter Ausgestaltung ist vorgesehen, dass Arbeitsschneiden zumindest einen sich im Wesentlichen radial erstreckenden Bereich aufweisen, wobei insbesondere Arbeitsschneiden einen von innen nach außen relativ zum Radius der Arbeitswelle in Bewegungsrichtung der Arbeitswelle um einen endlichen Winkel geneigten äußeren Bereich aufweisen. Die Verbindung der Arbeitsschneiden mit der Arbeitswelle erfolgt in bevorzugter Ausgestaltung dadurch, dass Arbeitsschneiden zerstörungsfrei lösbar, wie durch Verschraubung, in einem inneren Bereich an der Arbeitswelle befestigt sind.

Weitere Vorteile und Merkmale der Erfindung ergeben sich aus den Ansprüchen und aus den nachfolgenden Ausführungsbeispielen der Erfindung, die unter Bezugnahme auf die Zeichnung im Einzelnen erläutert sind. Dabei zeigt:
- Fig. 1: eine erste Ausführungsform der erfindungsgemäßen Vorrichtung zum Zerkleinern von Pflanzengut im vertikalen Schnitt;
- Fig. 2: eine vergrößerte Darstellung der Ausführungsform der erfindungsgemäßen Vorrichtung der Fig. 1 in Teilansicht;
- Fig. 3a: eine Draufsicht auf einen Gegenschneidenträger mit Gegenschneiden;
- Fig. 3b: einen Schnitt entsprechend B-B durch die Gegenschneiden-Anordnung der Fig. 1;
- Fig. 4: eine Darstellung der Wirkung der Erfindung gegenüber einem herkömmlichen Arbeiten mit konventionellen Gegenschneiden;
- Fig. 5: einen Schnitt entsprechend der Fig. 1 durch eine andere Ausgestaltung der erfindungsgemäßen Vorrichtung;
- Fig. 6: einen Schnitt entsprechend der Fig. 1 gemäß einer weiteren Ausgestaltung der erfindungsgemäßen Vorrichtung;
- Fig. 7a: einen Vertikalschnitt durch eine erfindungsgemäße Vorrichtung mit drei Reihen von Gegenschneiden; und
- Fig. 7b: die Sicht in Richtung des Pfeils E der Fig. 7a auf das Innere des Gehäuses mit drei Gegenschneidenreihen.

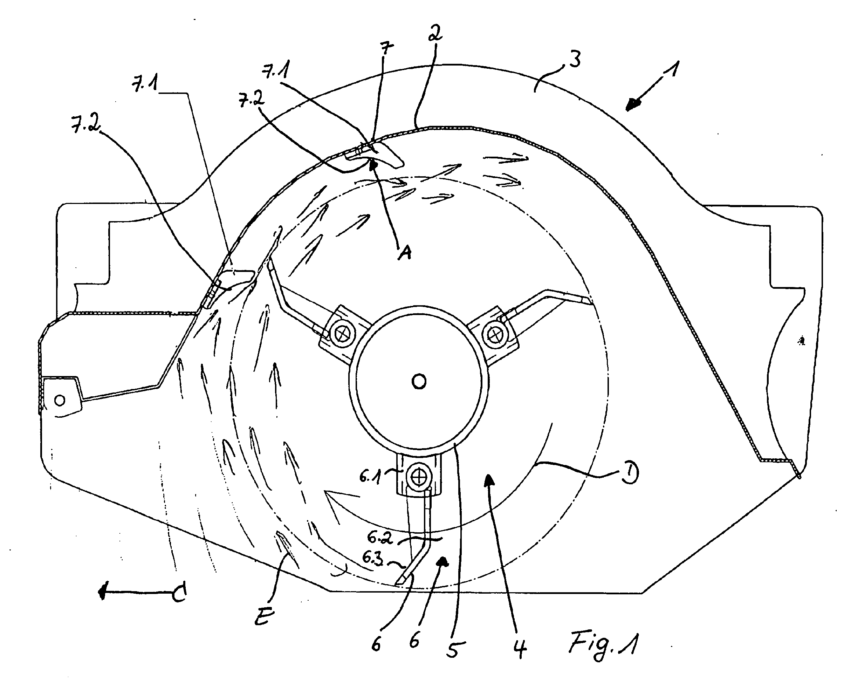

In den Zeichnungen (Fig. 1-3, 5, 6) ist eine erfindungsgemäße Vorrichtung 1, beispielsweise in Form eines Mulch-, Mäh- oder Zerkleinerungsgeräts, zum Zerkleinern von Pflanzengut schematisch mit einem vertikalen Schnitt dargestellt.

Die erfindungsgemäße Vorrichtung 1 weist ein nach oben hin geschlossenes und nach unten hin offenes Gehäuse 2 auf, welches über Träger 3 in hier nicht dargestellter Weise mit einem die Vorrichtung bewegenden Fahrzeug verbindbar ist.

Die erfindungsgemäße Vorrichtung 1 kann von dem Fahrzeug getragen sein. Vorzugsweise weist sie aber hier im Einzelnen nicht dargestellte Laufräder auf, mit denen sie auf dem Boden aufsitzt und durch die Bewegung des Fahrzeugs fährt.

Die horizontale Bewegung der Vorrichtung 1 erfolgt in der Richtung des Pfeils C.

Innerhalb des Gehäuses 2 ist eine Schneideinrichtung 4 mit einer horizontal gerichteten Arbeitswelle 5 vorgesehen, die mit ihren Enden an - hier nicht dargestellten Stirnseiten - des Gehäuses 2 gelagert ist. Die Arbeitswelle 5 trägt nach außen gerichtete Arbeitsschneiden 6 (Hammerschlegel), die mit der Arbeitswelle relativ zum Gehäuse 2 innerhalb desselben umlaufen, und das Pflanzengut abschlagen.

Die Arbeitsschneiden 6 weisen einen Befestigungsbereich 6.1 auf, mittels dessen sie an der Arbeitswelle 5 zerstörungsfrei lösbar, beispielsweise durch Schraubverbindungen, befestigt sind. Sie weisen weiterhin im dargestellten Ausführungsbeispiel einen ersten sich im Wesentlichen radial erstreckenden Schneidabschnitt 6.2 und radial außerhalb desselben einen von innen nach außen in Drehrichtung D geneigten Mitnehmerabschnitt 6.3 auf.

Der Förderstrom des zu zerkleinernden Pflanzengutes ist in der Fig. 1 durch die Pfeile E angedeutet.

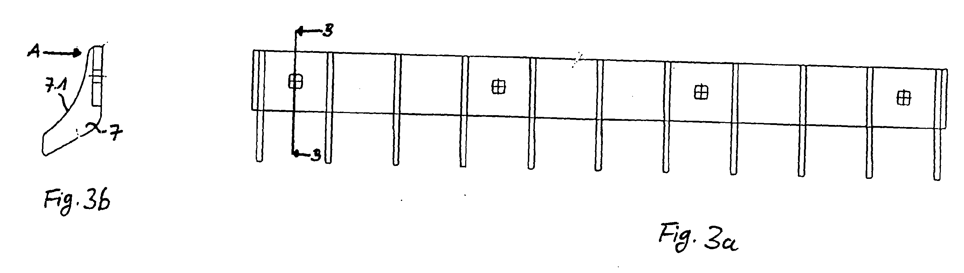

Erfindungsgemäß sind außerhalb der Arbeitswelle 5 und der Arbeitsschneiden 6 auf der Innenseite des Gehäuses 2 Gegenschneidenträger 7 mit Gegenschneiden 7.1 befestigt (Fig. 3a, 3b), die am Gehäuse fest angeordnet sind, während die Arbeitswelle 5 und die Arbeitsschneiden 6 sich relativ zu den Gegenschneiden 7.1 drehen.

Die Gegenschneiden 7.1 weisen jeweils eine der Bewegungsrichtung D der Arbeitswelle 5 und damit auch dem Förderstrom des zu zerkleinernden Pflanzenguts entgegengerichtete Schneidkante 7.2 auf.

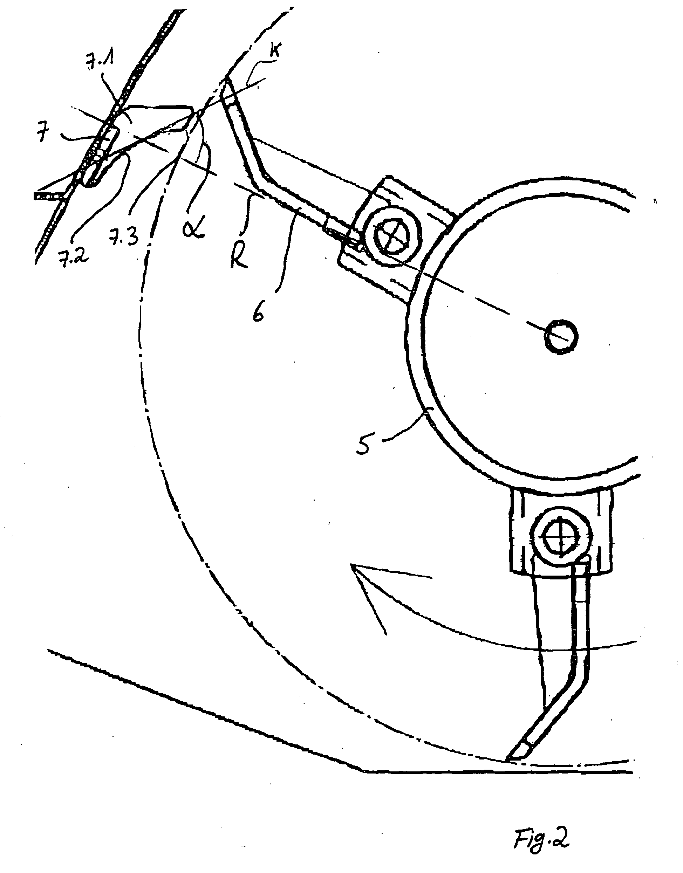

Die Schneidkante 7.2 erstreckt sich nicht radial zur Welle 5, sondern hat grundsätzlich einen zum Radius R geneigten Verlauf von außen nach innen in Umlauf- bzw. Förderrichtung D, E, weist also einen endlichen Winkel α zum Radius R der Arbeitswelle in Umlaufrichtung derselben auf - wie dies in der Fig. 2 dargestellt ist.

Bei einer konkaven Schneidkante 7.2, wie sie in den Fig. 1, 2 dargestellt ist, ändert sich der Winkel α zum Radius R von der Außenseite zur Innenseite der Schneidkante 7.2 und beträgt im äußeren Bereich nahezu 90° zum Radius R, während er am inneren Ende 7.3 der Schneidkante 7.2 etwa 5° oder mehr zum Radius R beträgt, wie dies aus der Fig. 2 ersichtlich ist.

In der Fig. 1 ist weiterhin, wie schon gesagt, der Förderverlauf des zu zerkleinernden Pflanzenguts durch die Pfeile E dargestellt. Es ist ersichtlich, dass durch die zum Radius R geneigte Anordnung der Schneidkante 7.2 das Pflanzengut durch diese Schneidkante in die Kontur der mit der Arbeitswelle 5 umlaufenden Arbeitsschneiden nach innen gedrängt wird und durch diese dann gegen die nachfolgende Gegenschneide gefördert und das Material dort weiter zerkleinert wird.

Hierdurch wird zum einen eine verbesserte Zerkleinerung des Pflanzenguts erreicht, zum anderen verhindert, dass das Pflanzengut sich am Innenumfang des Gehäuses 2 ansammelt und die Innenwandung verschmutzt und dort von Zeit zu Zeit oder aber nach der Bearbeitung entfernt werden muss. Durch diese Ausgestaltung wird darüber hinaus erreicht, dass der Energieeinsatz reduziert werden kann. Es hat sich überraschenderweise herausgestellt, der aufzuwendende Energieeinsatz durch die erfindungsgemäße Ausgestaltung der Fig. 1 um ca. 20 % reduziert wird.

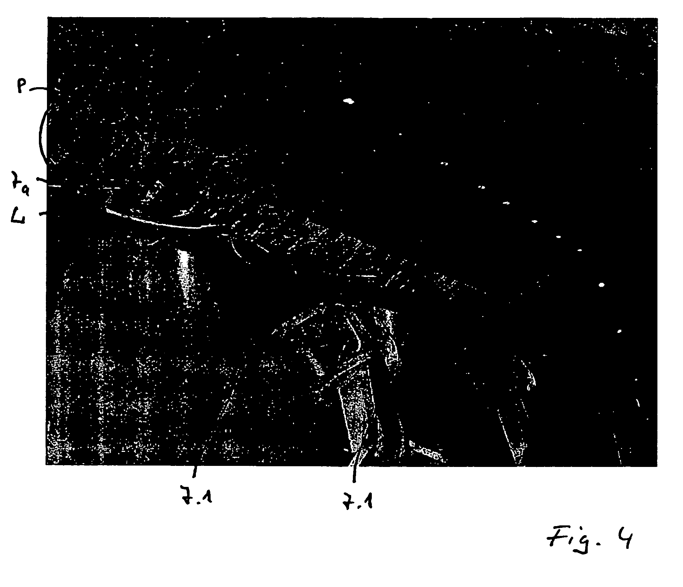

Bei der Vorrichtung der Fig. 4 sind im äußersten linken Bereich 4 herkömmliche Gegenschneiden 7a vorgesehen, während weiter rechts erfindungsgemäße konkave Gegenschneiden vorhanden sind. Es ist erkennbar, dass sich im Bereich der herkömmlichen Gegenschneiden 7a in erheblichem Umfang Pflanzengut P gesammelt hat, während der Bereich der erfindungsgemäßen Gegenschneiden 7.1 relativ sauber ist.

Hierdurch wird bewirkt, da zum einen wegen der sauberen Schnitt- und Zerkleinerungsfläche eine gleichbleibende Arbeit gewährleistet ist und die Beschleunigungsenergie durch die Arbeitsschneiden optimal zur Zerkleinerung und den Weitertransport zum Auswurf genutzt wird. Es tritt auch ein besseres Arbeitsergebnis zum zerkleinerten Mulchgut ein, da Musbildung und Verbacken etc. vermieden wird.

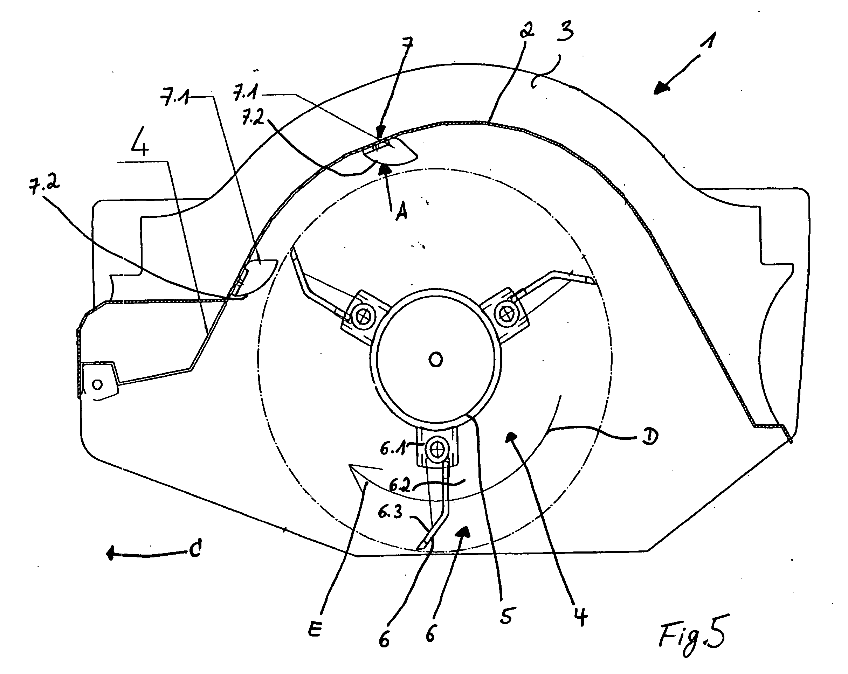

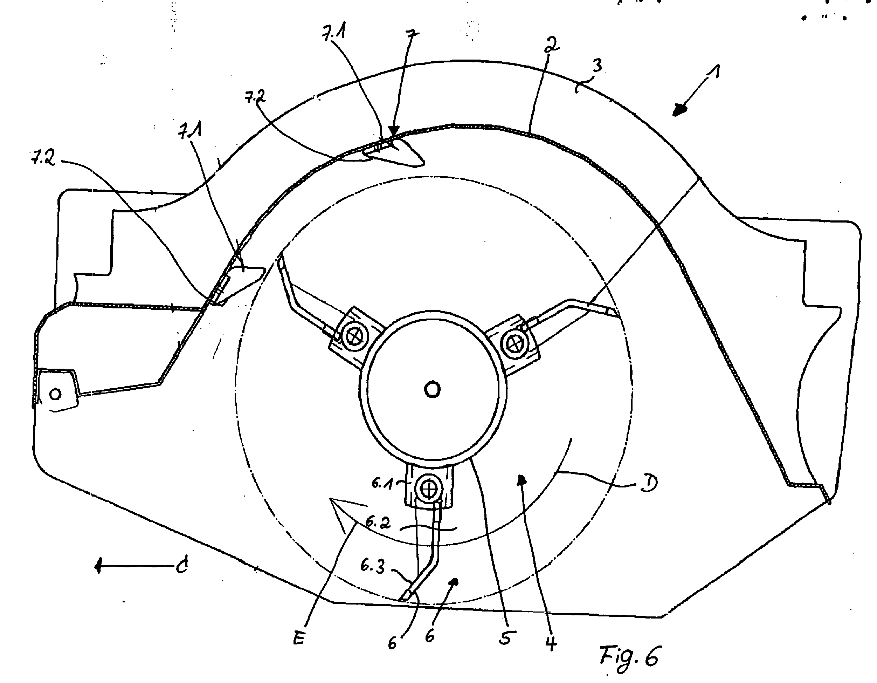

Die gleiche vorteilhafte Wirkung wird grundsätzlich auch mit den Ausgestaltungen der Fig. 5 und 6 erreicht. Auch dort wird eine bessere Zerkleinerung bei reduzierter Verschmutzung und reduziertem Arbeitseinsatz bedingt.

Bei der Ausgestaltung der Fig. 5 ist die dem Pflanzengut entgegengerichtete Schneidkante 7.2 der Gegenschneide konvex ausgebildet, wobei der außenliegende Bereich der Schneidkante 7.2 zum Radius R etwa einen Winkel von mehr als 20° einschließt, der sich bis zum inneren Ende 7.3 der Schneidkante 7.2 durch die konvexe Ausgestaltung der Schneidkante bis auf praktisch 90° vergrößert.

Bei der Ausgestaltung der Fig. 6 ist die Schneidkante 7.2 der Gegenschneide 7.1 gerade ausgebildet. Der Winkel α der Schneidkante 7.2 zum Radius R liegt hier bei etwa 45°, wobei er grundsätzlich in einem bevorzugten Bereich zwischen 30 und 75° liegen kann, wobei Werte ab 45° aufwärts bevorzugt sind.

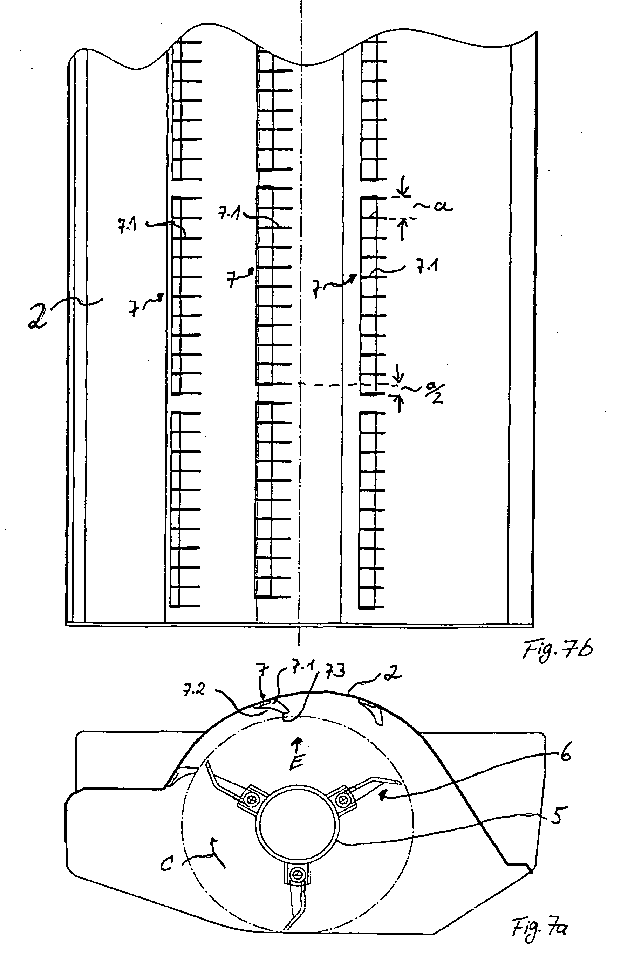

Die Fig. 7a zeigt im vertikalen Schnitt und die Fig. 7b mit Blick entsprechend dem Pfeil E auf die Innenseite des Gehäuses 2, bei der in Förderrichtung C an der Innenseite des Gehäuses drei Reihen von Gegenschneidenträgern 7 und Gegenschneiden 7.1 hintereinander angeordnet sind. Die Gegenschneidenträger 7 und damit auch die Gegenschneiden 7.1 sind dabei in ihrer Erstreckungsrichtung quer über das Gehäuse, also in Erstreckungsrichtung der Arbeitswelle 5 versetzt zueinander angeordnet und zwar gerade um die Hälfte des Abstandes a zwischen zwei Gegenschneiden 7.1, also um a/2. In Förderrichtung C aufeinanderfolgende Gegenschneiden zweier Reihen fluchten daher nicht miteinander, sondern sind in Richtung der Arbeitswelle 5 versetzt zueinander angeordnet. Hierdurch wird ein besseres und effektiveres Zerkleinern des Pflanzenguts erreicht. Während in der Ausgestaltung der Fig. 7a, 7b drei Reihen von Gegenschneiden 7 vorgesehen sind, kann ein entsprechender Versatz auch bei lediglich zwei Reihen von Gegenschneiden oder eben auch bei mehr als drei Reihen von Gegenschneiden vorgesehen sein.

### Bezugszeichenliste

- 1: Vorrichtung
- 2: Gehäuse
- 3: Träger
- 4: Schneideinrichtung
- 4: äußerst linker Bereich
- 5: Arbeitswelle
- 6: Arbeitsschneiden
- 6.1: Befestigungsbereich
- 6.2: Schneidabschnitt
- 6.3: Mitnehmerabschnitt
- 7: Gegenschneidenträgern
- 7.1: Gegenschneiden
- 7a, 7b: herkömmliche Gegenschneiden
- 7.2: Schneidkante
- 7.3: inneres Ende der Schneidkante
- a: Abstand
- C, E: Pfeil
- C: Förderrichtung
- D: Drehrichtung
- P: Pflanzenmaterial
- R: Radius
- α: Winkel

## Patentansprüche

1. Vorrichtung zum Zerkleinern von Pflanzengut in Form von Grünmasse und/oder Schwachholz mit einer horizontalen Arbeitswelle mit sich nach außen erstreckenden Arbeitsschneiden und mit außerhalb der Arbeitswelle angeordneten Gegenschneiden, relativ zu denen sich die Arbeitswelle dreht, **dadurch gekennzeichnet, dass** das radial innere Ende (7.3) der Gegenschneiden (7.1) radial außerhalb des äußeren Endes der Arbeitsschneiden (6) liegt und dass der Umlaufrichtung (D) der Arbeitswelle (5) entgegengerichtete Schneidkanten (7.2) der Gegenschneiden (7.1) einen endlichen Winkel (α) zur Erstreckung des von der Arbeitswelle (5) ausgehenden Radius (R) in Umlaufrichtung (D) der Arbeitswelle (5) aufweisen.

2. Vorrichtung nach Anspruch 1, **dadurch gekennzeichnet, dass** Schneidkanten (7.2) der Gegenschneiden (7.1) konkav ausgebildete Bereiche aufweisen.

3. Vorrichtung nach Anspruch 2, **dadurch gekennzeichnet, dass** Schneidkanten (7.2) der Gegenschneiden (7.1) konkav ausgebildet sind.

4. Vorrichtung nach einem der vorangehenden Ansprüche, da-durch **gekennzeichnet**, dass Schneidkanten (7.2) der Gegenschneiden (7.1) konvex ausgebildete Bereiche aufweisen.

5. Vorrichtung nach Anspruch 4, **dadurch gekennzeichnet, dass** Schneidkanten (7.2) der Gegenschneiden (7.1) konvex ausgebildet sind.

6. Vorrichtung nach einem der vorangehenden Ansprüche, **dadurch gekennzeichnet, dass** Schneidkanten (7.2) der Gegenschneiden (7.1) gerade ausgebildete Bereiche aufweisen.

7. Vorrichtung nach Anspruch 6, **dadurch gekennzeichnet, dass** Schneidkanten (7.2) der Gegenschneiden (7.1) gerade ausgebildet sind.

8. Vorrichtung nach einem der vorangehenden Ansprüche, **dadurch gekennzeichnet, dass** Arbeitsschneiden (6) zumindest einen sich im Wesentlichen radial erstreckenden Bereich (6.1) aufweisen.

9. Vorrichtung nach einem der vorangehenden Ansprüche, **dadurch gekennzeichnet, dass** Arbeitsschneiden (6) einen von innen nach außen relativ zum Radius (R) der Arbeitswelle (5) in Bewegungsrichtung (D) der Arbeitswelle (5) um einen endlichen Winkel geneigten äußeren Bereich (6.3) aufweisen.

10. Vorrichtung nach einem der Ansprüche 1 bis 9, **dadurch gekennzeichnet, dass** die Gegenschneiden (7.1) von in Förderrichtung (C) aufeinanderfolgenden Gegenschneiden (7.1) in Erstreckungsrichtung der Antriebswelle (5) zueinander versetzt angeordnet sind.

11. Vorrichtung nach Anspruch 10, **dadurch gekennzeichnet, dass** die Gegenschneiden (7.1) von in Förderrichtung (C) aufeinanderfolgenden Gegenschneiden in Erstreckungsrichtung der Antriebswelle (5) zueinander etwa um die Hälfte des Abstandes (a) zwei Gegenschneiden (7.1) eine Reihe von Gegenschneiden (7.1) versetzt angeordnet sind.

## Claims

1. A device for chopping plant material in the form of green biomass and/or small-sized timber, having a horizontal working shaft with outwardly extending working cutters and having counter cutters arranged beyond the working shaft, relative to which the working shaft rotates, **characterised in that** the radially inner end (7.3) of the counter cutters (7.1) is located radially beyond the outer end of the working cutters (6) and **in that** cutting edges (7.2) of the counter cutters (7.1) facing contrary to the direction of rotation (D) of the working shaft (5) form a finite angle (α) relative to the extension of the radius (R) extending from the working shaft (5) in the direction of rotation (D) of the working shaft (5).

2. A device according to claim 1, **characterised in that** cutting edges (7.2) of the counter cutters (7.1) comprise areas of concave construction.

3. A device according to claim 2, **characterised in that** cutting edges (7.2) of the counter cutters (7.1) are of concave construction.

4. A device according to any one of the preceding claims, **characterised in that** cutting edges (7.2) of the counter cutters (7.1) have areas of convex construction.

5. A device according to claim 4, **characterised in that** cutting edges (7.2) of the counter cutters (7.1) are of convex construction.

6. A device according to any one of the preceding claims, **characterised in that** cutting edges (7.2) of the counter cutters (7.1) comprise areas of straight construction.

7. A device according to claim 6, **characterised in that** cutting edges (7.2) of the counter cutters (7.1) are of straight construction.

8. A device according to any one of the preceding claims, **characterised in that** working cutters (6) comprise at least one area (6.1) extending substantially radially.

9. A device according to any one of the preceding claims, **characterised in that** working cutters (6) comprise an outer area (6.3) inclined from the inside towards the outside by a finite angle relative to the radius (R) of the working shaft (5) in the direction (D) of movement of the working shaft (5).

10. A device according to any one of claims 1 to 9, **characterised in that** the counter cutters (7.1) of consecutive counter cutters (7.1) in the conveying direction (C) are arranged offset relative to one another in the direction of extension of the drive shaft (5).

11. A device according to claim 10, **characterised in that** the counter cutters (7.1) of consecutive counter cutters in the conveying direction (C) are arranged offset relative to one another in the direction of extension of the drive shaft (5) approximately by half the distance (a) between two counter cutters (7.1) of one row of counter cutters (7.1).

## Revendications

1. Dispositif pour broyer des matières végétales sous forme de masse verte et/ou de bois mince avec un arbre horizontal muni d'arêtes vives s'étendant vers l'extérieur et de contre-arêtes disposées à l'extérieur de l'arbre, lequel arbre tournant autour desdites contre-arêtes, **caractérisé en ce que** l'extrémité intérieure radiale (7.3) des contre-arêtes (7.1) se situe radialement à l'extérieur de l'extrémité extérieure des arêtes vives (6) et que les arêtes vives (7.2) des contre-arêtes (7.1) opposées au sens de rotation (D) de l'arbre (5) présentent un angle fini (α) afin d'allonger le rayon (R) partant de l'arbre (5) dans le sens de la rotation (D) de l'arbre (5).

2. Dispositif selon la revendication 1, **caractérisé en ce que** des arêtes vives (7.2) des contre-arêtes (7.1) présentent des zones de forme concave.

3. Dispositif selon la revendication 2, **caractérisé en ce que** des arêtes vives (7.2) des contre-arêtes (7.1) sont de forme concave.

4. Dispositif selon une des revendications qui précèdent, **caractérisé en ce que** des arêtes vives (7.2) des contre-arêtes (7.1) présentent des zones de forme convexe.

5. Dispositif selon la revendication 4, **caractérisé en ce que** des arêtes vives (7.2) des contre-arêtes (7.1) sont de forme convexe.

6. Dispositif selon une des revendications qui précèdent, **caractérisé en ce que** des arêtes vives (7.2) des contre-arêtes (7.1) présentent des zones de forme droite.

7. Dispositif selon la revendication 6, **caractérisé en ce que** des arêtes vives (7.2) des contre-arêtes (7.1) sont de forme droite.

8. Dispositif selon une des revendications qui précèdent, **caractérisé en ce que** des arêtes vives (6) présentent au moins une zone essentiellement radiale (6,1).

9. Dispositif selon une des revendications qui précèdent, **caractérisé en ce que** des arêtes vives (6) présentent une zone extérieure (6.3) inclinée avec un angle fini de l'intérieur vers l'extérieur par rapport au rayon (R) de l'arbre (5) dans le sens de rotation (D) dudit arbre (5).

10. Dispositif selon une des revendications 1 à 9, **caractérisé en ce que** les contre-arêtes (7.1) sont disposées en quinconce dans le sens du transport (C) des contre-arêtes (7.1) successives dans le sens de l'allongement de l'arbre (5).

11. Dispositif selon la revendication 10, **caractérisé en ce que** les contre-arêtes (7.1) des contre-arêtes se succédant dans le sens du transport (C) sont disposées dans le sens de l'allongement de l'arbre (5) respectivement en quinconce de la moitié de l'écartement (a) de deux contre-arêtes (7.1) une rangée de contre-arêtes (7.1).
